# EUROPEAN PATENT APPLICATION

(11) **EP 4 755 526 A1**
(43) Date of publication of application: **10.06.2026**
(21) Application number: 25786901.6
(22) Date of filing: 08.04.2025
(51) Int. Cl.: B05C 5/02, H01M 4/04, H01M 10/42

(54) **DIE COATER**

(30) Priority: 12.04.2024 KR 20240048988; 13.03.2025 KR 20250032482
(71) Applicant: LG Energy Solution, Ltd., Seoul 07335 (KR)
(72) Inventor: PARK, Min Gu, Daejeon 34122 (KR); KIM, Sang Min, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/004728
(87) International publication number: WO 2025/216529

(57) **Abstract**

A die coater includes a first die including a land portion and a manifold, the manifold having a predetermined depth from the land portion and configured to accommodate an electrode slurry. The die coater further includes a body shim coupled to the first die, wherein the body shim includes wings and a body arranged between and connected to the wings, the wings protruding from the body in a first direction and the body extends in a second direction perpendicular to the first direction. The die coater further includes a first spacer shim coupled to the first die, the first spacer shim overlapping the manifold, wherein the first spacer shim includes first and second sidewalls defining an insulating flow path extending in the first direction, and the width of the insulating flow path in the second direction is variable.

## Description

### [Technical Field]

The present disclosure relates to a die coater.

This application claims the benefit of priority based on Korean Patent Application No. 10-2024-0048988, filed on April 12, 2024 and Korean Patent Application No. 10-2025-0032482, filed on March 13, 2025, and the entire contents of the Korean patent applications are incorporated herein by reference.

### [Background]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

Electrodes of a secondary battery are most important components of the secondary battery in terms of an energy density. The electrodes of the secondary battery may be formed through a coating process, a roll press process, a drying process, a slitting process, and a notching process. Among these processes, the coating process is a process of applying a coating material containing an active material onto an electrode plate and may be performed by a die coater.

### [Technical Problem]

The present disclosure is directed to providing a die coater with improved yield and reliability.

### [Technical Solution]

Aspects of the present disclosure provide a die coater. The die coater includes: a first die including a land part and a manifold that has a certain depth from the land part and is configured to accommodate an electrode slurry; a body shim coupled to the first die and including wings and a body interposed between the wings and connected to the wings, in which the wings protrude from the body in a first direction, and the body extends in a second direction perpendicular to the first direction; and a first spacer shim coupled to the first die and overlapping the manifold. The first spacer shim includes first and second side walls that define an insulating flow path extending in the first direction, and a width of the insulating flow path in the second direction is variable.

The first and second side walls may face each other, the first side wall may extend in the first direction, and the second side wall may include a step structure.

The second side wall may include a first portion extending in the first direction, a second portion connected to the first portion and extending in the second direction, a third portion connected to the second portion and extending in the first direction, and a fourth portion connected to the third portion and extending in the second direction.

A length of the second portion of the second side wall in the second direction may be different from a length of the fourth portion of the second side wall in the second direction.

The length of the second portion of the second side wall in the second direction may be less than the length of the fourth portion of the second side wall in the second direction.

The length of the second portion of the second side wall in the second direction may be in a range of 0.25 to 0.75 times the length of the fourth portion of the second side wall in the second direction.

A length of the first side wall in the first direction may be greater than the sum of a length of the first portion of the second side wall in the first direction and a length of the third portion of the second side wall in the first direction.

The fourth portion of the second side wall may extend to an edge of the spacer shim parallel to the first direction.

A distance between the first side wall and the first portion of the second side wall in the second direction may be less than a distance between the first side wall and the third portion of the second side wall in the second direction.

A distance between the first side wall and the first portion of the second side wall in the second direction may be the same as a length of the fourth portion of the second side wall in the second direction.

The die coater may further include a second spacer shim coupled to the first die, overlapping the manifold, and spaced apart from the first spacer shim in the second direction, the second spacer shim may include first and second insulating flow paths, the first insulating flow path may be the same as the insulating flow path, and the second insulating flow path may be symmetrical to the first insulating flow path.

The die coater may further include a third spacer shim coupled to the first die, overlapping the manifold, and interposed between the first and second spacer shims, the third spacer shim may include third and fourth insulating flow paths, the third insulating flow path may be the same as the insulating flow path, and the fourth insulating flow path may be symmetrical to the third insulating flow path.

The first spacer shim, the second spacer shim, and the third spacer shim may be integrated with the body shim.

### [Advantageous Effects]

According to aspects of the present disclosure, the perpendicularity of an edge profile of an electrode slurry provided by a die coater can be increased. Accordingly, the reliability and yield of a coating process using the die coater may improve.

Effects achievable from aspects of the present disclosure are not limited to the above-described effects, and other effects that are not described herein will be clearly derived and understood by those of ordinary skill in the art to which the aspects of the present disclosure pertain from the following description. That is, unintended effects achieved when the aspects of the present disclosure are implemented are derivable by those of ordinary skill in the art from the aspects of the present disclosure.

### [Brief Description of the Drawings]

FIG. 1 illustrates secondary battery manufacturing equipment according to aspects.
FIG. 2 is a side view of a die coater according to aspects, in which a side cross section of the die coater is shown.
FIG. 3 is an exploded perspective view for describing a die coater according to aspects.
FIG. 4 illustrates a part of FIG. 3.
FIG. 5 is a plan view of a spacer shim according to aspects.
FIG. 6 illustrates a part of FIG. 5.
FIG. 7 is a cross-sectional view taken along line 6I-6I' of FIG. 6.
FIG. 8 is a cross-sectional view taken along line 6II-6II' of FIG. 6.
FIG. 9 is a cross-sectional view taken along line 6III-6III' of FIG. 6.
FIG. 10 is a plan view of a spacer shim according to aspects.
FIG. 11 is a plan view of a spacer shim according to aspects.
FIG. 12 is a perspective view of a part of a die coater according to aspects.
FIG. 13 is a graph showing an effect of a die coater according to aspects.

### [Detailed Description]

Hereinafter, aspects of the present disclosure will be described in detail with reference to the accompanying drawings. Before describing aspects of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, aspects set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because aspects of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Aspect)

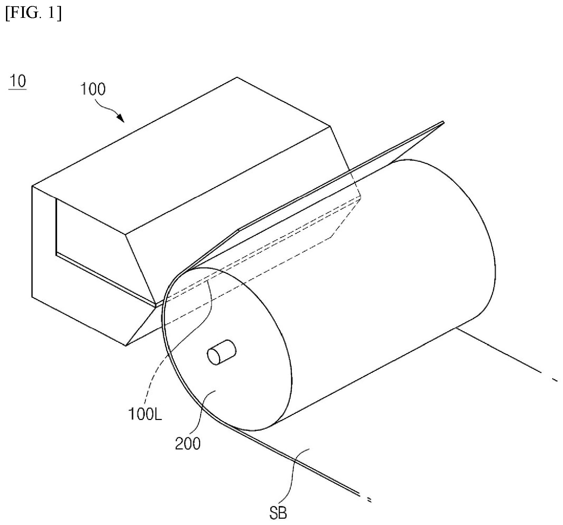

FIG. 1 illustrates secondary battery manufacturing equipment 10 according to aspects.

According to aspects, the secondary battery manufacturing equipment 10 may include a die coater 100 and rolls 200. The die coater 100 may be configured to discharge a coating material. A portion of the die coater 100 from which the coating material is discharged may be referred to as a lip 100L. According to aspects, the die coater 100 may be configured to coat a current collector SB with the coating material. The coating material may include an electrode slurry and an insulating slurry. The die coater 100 may be configured to simultaneously provide the electrode slurry and the insulating slurry on the current collector SB.

The electrode slurry may be used to manufacture an electrode of a secondary battery. The electrode slurry may include an electrode active material, a conductive additive, a binder, and a solvent. The electrode slurry may be prepared by dissolving the electrode active material, the conductive additive, the binder, etc. in the solvent. The solvent may disperse the electrode active material and the like. The solvent may be an aqueous solvent or a nonaqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the electrode slurry. Parameters that determine the amount of the solvent to be used include a thickness to which the electrode slurry is to be applied, manufacturing yield, and workability.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+z}Ni_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive additive may have conductivity without causing a chemical change in a finally manufactured secondary battery. For example, the conductive additive may include: graphite such as natural graphite or artificial graphite; carbon black such as acetylene black, Ketjen black, channel black, furnace black, lamp black or thermal black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive additive and a binding force with respect to an electrode plate. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

A thickness of a positive electrode current collector may be in a range of about 3 µm to about 500 µm. The positive electrode current collector may have high conductivity without causing a chemical change in a finally manufactured secondary battery. The positive electrode current collector may include, for example, stainless steel, nickel, titanium, baked carbon, or aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of a film, sheet, foil, net, porosity, foam or non-woven fabric.

A thickness of a negative electrode current collector may be in a range of about 3 µm to about 500 µm. The negative electrode current collector may have high conductivity without causing a chemical change in a finally manufactured secondary battery. The negative electrode current collector may include copper, stainless steel, aluminum, nickel, titanium, baked carbon, or aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of a film, sheet, foil, net, porosity, foam or non-woven fabric.

The insulating slurry may include, for example, an insulating material, styrene butadiene rubber (SBR), a binder, a stabilizer, and a solvent. The insulating material may include ceramic such as boehmite. The binder may include one of the materials described above with respect to the electrode slurry.

After the coating process is performed, a roll press process, a drying process, a slitting process, and a notching process may be performed. The roll press process may be performed by roll press equipment including pressing rolls. By performing the roll press process, a bonding force between a surface of the electrode plate and the active material may be enhanced. Therefore, the movement of lithium ions in the electrode may be promoted, and an output and performance of a finally manufactured secondary battery may be improved.

The drying process of the electrode may include supplying dry air into a drying chamber or supplying heat energy to the electrode in a chamber through infrared rays, high-temperature air or the like. In the drying process, the uniformity and reliability of the electrode may be improved by removing moisture from the electrode.

The slitting process is a process of dividing the electrode into a plurality of electrodes having a smaller width in a transverse direction. Thereafter, the electrode may be cut into a shape with a tab by the notching process.

### (Second aspect)

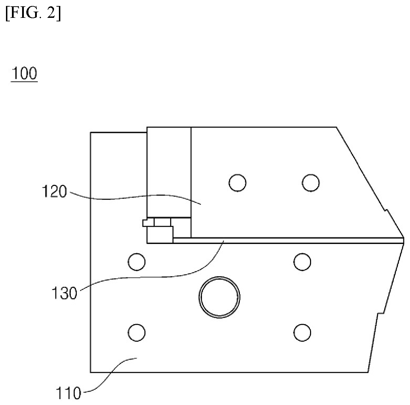

FIG. 2 is a side view of a die coater 100 according to aspects, in which a side cross section of the die coater 100 is shown.

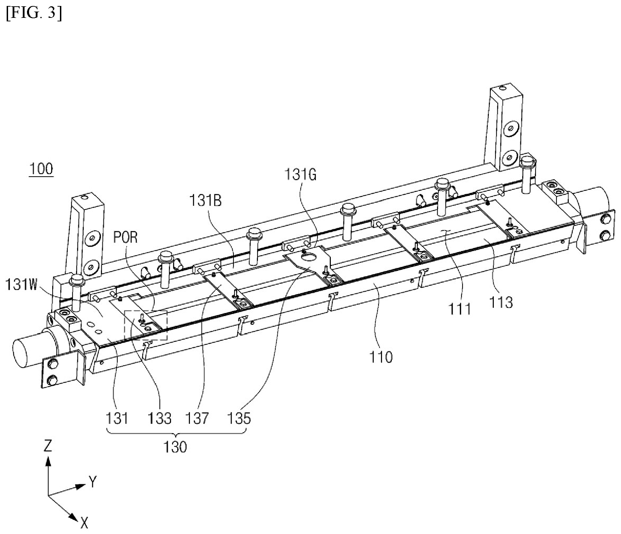

FIG. 3 is an exploded perspective view for describing the die coater 100 according to aspects. In FIG. 3, a second die 120 is omitted.

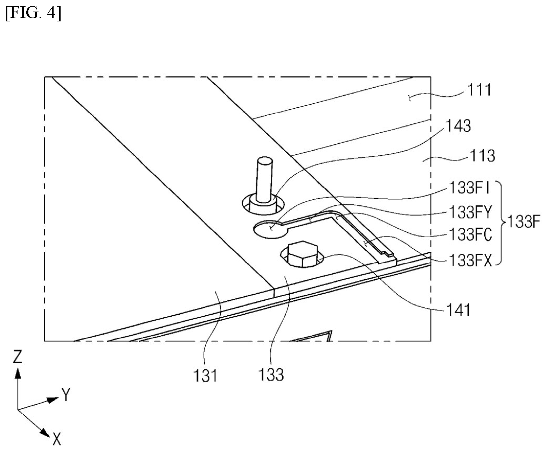

FIG. 4 is a perspective view of a part of FIG. 3.

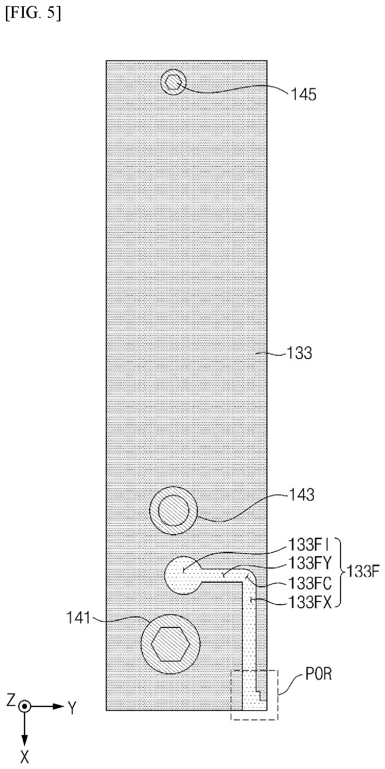

FIG. 5 is a plan view of a spacer shim 133 according to aspects.

Referring to FIGS. 2 to 5, the die coater 100 may include a first die 110, a second die 120, and a shim 130.

Hereinafter, the technical idea of the present disclosure will be described with respect to an aspect in which the first die 110 and the second die 120 are separate elements as described above. Based on the description herein, technicians of ordinary skill in the art will be able to easily derive an aspect in which the first die 110 and the second die 120 are integrated to form an integral die.

The first die 110 may include a manifold 111 and an electrode slurry supply path connected to the manifold 111. An electrode slurry may flow into the manifold 111 through the electrode slurry supply path. The manifold 111 may be an empty space configured to accommodate the electrode slurry. After the manifold 111 is filled with the electrode slurry, the electrode slurry may be discharged to the outside of the die coater 100. The electrode slurry may be discharged from the manifold 111 to the outside through slits defined by the shim 130 and a land part 113.

The manifold 111 may have a well shape with a certain depth from the land part 113. The manifold 111 may include an inclined surface and thus the electrode slurry may be stably discharged from the die coater 100.

The shim 130 may be interposed between the first die 110 and the second die 120. The first die 110 may be in contact with a lower surface of the shim 130. The second die 120 may be in contact with an upper surface of the shim 130. The shim 130 may include a body shim 131 and spacer shims 133, 135 and 137. The body shim 131 may be referred to as a body part of the shim 130, and each of the spacer shim 133, 135, and 137 may be referred to as a spacer part of the shim 130.

The body shim 131 may include a body 131B and wings 131W. The body 131B may extend in a Y-axis direction. The body 131B may be a plate whose width in an X-axis direction is less than a length thereof in the Y-axis direction. Here, the X-axis direction may be a direction in which the electrode slurry is discharged, and the Y-axis direction may be substantially perpendicular to the X-axis direction. The body shim 131 may be substantially parallel to each of the X-axis direction and the Y-axis direction and be substantially perpendicular to a Z-axis direction. The wings 131W may be connected to an end portion of the body 131B in the Y-axis direction. The wings 131W may protrude from the body 131B in the X-axis direction.

The body 131B may include a plurality of grooves 131G. Each of the plurality of grooves 131G may be in a side of the body 131B adjacent to the manifold 111 (e.g., a side of the body 131B overlapping the manifold 111) among sides of the manifold 111 parallel to the Y-axis direction. Each of the plurality of grooves 131G may be recessed inward from an edge of the body 131B parallel to the Y-axis direction (i.e., toward another edge thereof parallel to the Y-axis direction).

The plurality of grooves 131G may correspond to the spacer shims 133, 135 and 137. The plurality of grooves 131G may expose a portion of the first die 110. The plurality of spacer shims 133, 135 and 137 may be partially inserted into a corresponding one of the plurality of grooves 131G. The plurality of spacer shims 133, 135 and 137 may be fixed to the portion of the first die 110 exposed via the plurality of grooves 131G by a method such as bolting.

According to aspects, a width of each of the plurality of grooves 131G in the Y-axis direction may be different from a width of the corresponding one of the spacer shims 133, 135 and 137 in the Y-axis direction. According to aspects, the width of each of the plurality of grooves 131G in the Y-axis direction may be greater than the width of the corresponding one of the spacer shims 133, 135 and 137 in the Y-axis direction. Accordingly, the plurality of grooves 131G may not only guide the coupling of the spacer shims 133, 135 and 137 but also provide a degree of freedom to the spacer shims 133, 135 and 137 in the Y-axis direction, so that positions of the spacer shims 133, 135 and 137 may be precisely adjusted in the Y-axis direction.

According to aspects, the spacer shims 133, 135 and 137 may be interposed between the wings 131W in the Y-axis direction. According to aspects, the spacer shims 133, 135 and 137 may overlap the wings 131W in the Y-axis direction.

According to aspects, the spacer shims 133 may be adjacent to edges of the shim 130 in the Y-axis direction. According to aspects, the spacer shims 133 may be adjacent to the wings 131W. According to aspects, the spacer shims 133 may be in contact with the wings 131W but aspects are not limited thereto. The spacer shims 133 may have shapes that are symmetrical to each other. The spacer shims 133 may be symmetrical with respect to an axis parallel to the X-axis direction. Each of the spacer shims 133 may be referred to as an edge spacer shim or a first spacer shim.

According to aspects, the spacer shim 135 may be on a central part of the shim 130 in the Y-axis direction. According to aspects, the spacer shim 135 may be interposed between the spacer shims 133. The spacer shim 135 may be referred to as a center spacer shim or a second spacer shim.

According to aspects, the spacer shims 137 may be interposed between the spacer shims 133 and the spacer shim 135. Each of the spacer shims 137 may be referred to as an intermediate spacer shim or a third spacer shim.

The spacer shims 133, 135 and 137 may partially cover the manifold 111. The spacer shims 133, 135 and 137 may overlap the manifold 111 in the Z-axis direction. In FIG. 3, the spacer shims 133, 135 and 137 may divide the manifold 111 into four regions and thus the die coater 100 may be configured to form four coated lanes by performing a coating process once.

Technicians of ordinary skill in the art will be able to easily derive a die coater configured to form various numbers of coated lanes, e.g., one, two, eight, sixteen or thirty two coated lanes, based on the description herein. For example, a die coater configured to form eight coated lanes may include a shim assembly that includes two edge spacer shims, one center spacer shim, and six intermediate spacer shims.

Each of the spacer shims 133, 135 and 137 may define one or more insulating flow paths. More specifically, each of the spacer shims 133 on an edge portion of the shim 130 may define one insulating flow path, and each of the spacer shims 135 and 137 between the spacer shims 133 may define two insulating flow paths. Accordingly, an insulating slurry covering the electrode slurry may be provided on an edge of each of coated parts.

The die coater 100 may further include shim fixing devices 141, 143 and 145 and shim fixing pins 147.

The shim fixing devices 145 may fix the spacer shims 133 on the portion of the first die 110 exposed via the groove 131G. Each of the spacer shims 133 may include a fastening hole corresponding to one of the shim fixing devices 145 (i.e., a fastening hole into which one of the shim fixing devices 145 is inserted and which is penetrated by one of the shim fixing devices 145).

The shim fixing devices 141 and the shim fixing pins 143 may be partially inserted into the land part 113 of the first die 110. The shim fixing devices 141 and the shim fixing pins 143 may be configured to fix the spacer shims 133 to the land part 113 of the first die 110. The shim fixing devices 141 may be, for example, bolts but are not limited thereto.

The shim fixing pins 143 may be, for example, bidirectional pins. Accordingly, the shim fixing pins 143 may be configured to fix the second die 120 together with the shim 130, in addition to the first die 110. Each of the spacer shims 133 may include fastening holes corresponding to the shim fixing devices 141 and the shim fixing pins 143 (i.e., fastening holes into which the shim fixing devices 141 and the shim fixing pins 143 are inserted and which are penetrated by the shim fixing devices 141 and the shim fixing pins 143).

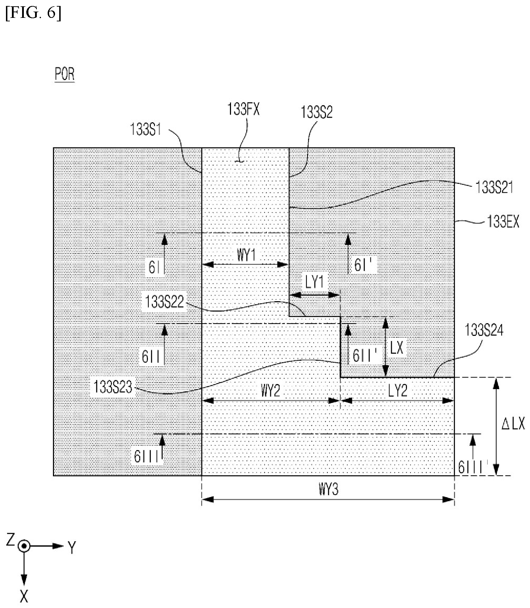

FIG. 6 illustrates a part POR of FIG. 5.

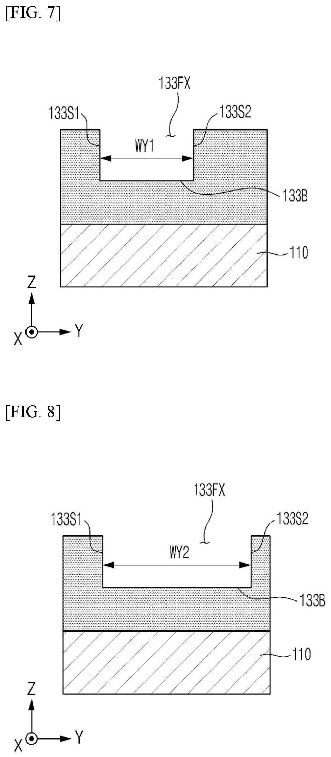

FIG. 7 is a cross-sectional view taken along line 6I-6I' of FIG. 6.

FIG. 8 is a cross-sectional view taken along line 6II-6II' of FIG. 6.

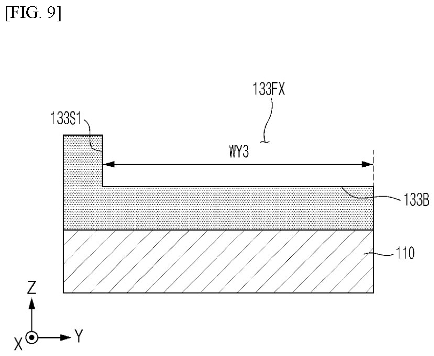

FIG. 9 is a cross-sectional view taken along line 6III-6III' of FIG. 6.

Referring to FIGS. 5 to 9, the spacer shim 133 may include a trench base 133B and first and second trench side walls 133S1 and 133S2 that define an insulating flow path 133F. The trench base 133B may be substantially perpendicular to the Z-axis direction. The first and second trench side walls 133S1 and 133S2 may be substantially perpendicular to the trench base 133B but are not limited thereto.

The insulating flow path 133F may provide a path for discharging the insulating slurry. The insulation flow path 133F may be connected to an inlet 133FI. The insulation flow path 133F may include a first portion 133FY, a corner portion 133FC, and a second portion 133FX.

The inlet 133FI may have a larger width than other portions of the insulating flow path 133F, such as the first portion 133FY, the corner portion 133FC and the second portion 133FX, thus allowing the insulating slurry to be stably supplied.

The first portion 133FY may extend along the Y-axis direction. The corner portion 133FC may be interposed between the first portion 133FY and the second portion 133FX. The corner portion 133FC may be connected to each of the first portion 133FY and the second portion 133FX, and include a bent portion. The second portion 133FX may extend in the X-axis direction. The second portion 133FX may extend to the lip 100L (see FIG. 1) of the die coater 100 (see FIG. 1) and thus may be referred to as a discharge flow path of the insulating slurry.

Unlike the example of FIG. 5, a bent portion connecting the second portion 133FX and the inlet 133FI may be provided instead of the first portion 133FY and the corner portion 133FC. That is, the insulating flow path 133F may not include a portion extending along the Y-axis direction.

According to aspects, the second portion 133FX of the insulating flow path 133F may have a variable width in the Y-axis direction. According to aspects, the second portion 133FX of the insulating flow path 133F may include a portion having a first width WY1 and a portion having a second width WY2 in the Y-axis direction. The portion having the first width WY1 may be closer to the lip 100L (see FIG. 1) than the portion having the second width WY2. The portion having the first width WY1 may be closer to the lip 100L (see FIG. 1) than the portion having the second width WY2. The first width WY1 and the second width WY2 may be different from each other. The second width WY2 may be greater than the first width WY1.

The second side wall 133S2 may include a first portion 133S21 extending in the X-axis direction, a second portion 133S22 extending in the Y-axis direction, a third portion 133S23 extending in the X-axis direction, and a fourth portion 133 S24 extending in the Y-axis direction.

The first width WY1 may be a distance between the first side wall 133S1 and the first portion 133S21 of the second side wall 133S2 in the Y-axis direction. The second width WY2 may be a distance between the first side wall 133S1 and the third portion 133S23 of the second side wall 133S2 in the Y-axis direction.

The second portion 133S22 may be connected to the first portion 133S21. The third portion 133S23 may be connected to the second portion 133S22. The fourth portion 133S24 may be connected to the third portion 133S23. Accordingly, the second side wall 133S2 may have a step structure consisting of the first to fourth portions 133S21, 133S22, 133S23, and 133S24.

According to aspects, the first side wall 133S1 may be closer to the center of the spacer shim 133 than the second side wall 133S2. According to aspects, the first side wall 133S1 may be closer to an edge 133EX of the spacer shim 133 parallel to the X-axis direction than the second side wall 133S2.

According to aspects, the difference between the first width WY1 and the second width WY2 may be substantially the same as a length of the second portion 133S22 of the side wall 133S2. The fourth portion 133S24 of the side wall 133S2 may extend to the edge 133EX. Accordingly, some of the electrode slurry flowing from the manifold 111 to the land part 113 may be introduced into the second portion 133FX of the insulating flow path 133F, and the electrode slurry and the insulating slurry may come into contact with each other before they are discharged. A difference △LX between a length of the first side wall 133S1 in the X-axis direction and a length of the second side wall 133S2 in the X-axis direction may be a distance to which the electrode slurry and the insulating slurry flow while in contact with each other.

According to aspects, the length of the first side wall 133S1 in the X-axis direction may be different from the length of the second side wall 133S2 in the X-axis direction. According to aspects, the length of the first side wall 133S1 in the X-axis direction may be greater than the length of the second side wall 133S2 in the X-axis direction. The length of the second side wall 133S2 in the X-axis direction may be substantially the same as the sum of a length of the first portion 133S21 of the second side wall 133S2 in the X-axis direction and a length LX of the third portion 133S23 of the second side wall 133S2. The length LX of the third portion 133S23 of the second side wall 133S2 in the X-axis direction may be sufficient to allow the insulating slurry to flow in the Y-axis direction by a length LY1 of the second portion 133S22 in the Y-axis direction.

According to aspects, the length LY1 of the second portion 133S22 of the second side wall 133S2 in the Y-axis direction and a length LY2 of the fourth portion 133S24 in the Y-axis direction may be different from each other. According to aspects, the length LY1 of the second portion 133S22 of the second side wall 133S2 in the Y-axis direction may be less than the length LY2 of the fourth portion 133S24 in the Y-axis direction. According to aspects, the length LY1 of the second portion 133S22 of the second side wall 133S2 in the Y-axis direction may be in a range of 0.25 to 0.75 times the length LY2 of the fourth portion 133S24 of the second side wall 133S2 in the Y-axis direction.

The first width WY1 may be different from the length LY1 of the second portion 133S22 of the second side wall 133S2 in the Y-axis direction. The first width WY1 may be greater than the length LY1 of the second portion 133S22 of the second side wall 133S2 in the Y-axis direction. According to aspects, the length LY1 of the second portion 133S22 of the second side wall 133S2 in the Y-axis direction may be in a range of 0.25 to 0.75 times the first width WY1. The first width WY1 may be the same as the length LY2 of the fourth portion 133S24 of the second side wall 133S2 in the Y-axis direction but is not limited thereto.

According to aspects, a width by which each of the insulating slurry and the electrode slurry is to be spread in the second portion 133FX of the insulating flow path 133F of the spacer shim 133 may be determined by adjusting the length LY1 of the second portion 133S22 of the second side wall 133S2 in the Y-axis direction and the length LY2 of the fourth portion 133S24 of the second side wall 133S2 in the Y-axis direction. A position and size of an overlapping portion between an electrode slurry layer and an insulating slurry layer formed on an electrode current collector, and a loading amount of the insulating slurry may be determined by a width by the insulating slurry spreads and a width by the electrode slurry spreads in the trench base 133B.

By forming a step structure consisting of the first to fourth portions 133S21, 133S22, 133S23 and 133S24 on the second side wall 133S2, it is possible to control a width by which each of the insulating slurry and the electrode slurry is to be spread in the trench base 133B, and particularly, by introducing the electrode slurry into the trench base 133B of the spacer shim 133 to cause the insulating slurry and the electrode slurry to be in contact with each other before the insulating slurry is discharged, thereby improving the perpendicularity of a loading amount profile of the electrode slurry.

According to aspects, a width of the trench base 133B in the Y-axis direction may be variable. According to aspects, the trench base 133B may include a portion having a first width WY1 in the Y-axis direction, a portion having a second width WY2 in the Y-axis direction, and a portion having a third width WY3 in the Y-axis direction.

The third width WY3 may be different from the second width WY2. The third width WY3 may be greater than the second width WY2. The third width WY3 may be substantially the same as the sum of the second width WY2 and the length LY2 of the fourth portion 133S24 of the second side wall 133S2 in the Y-axis direction.

The portion of the trench base 133B having the second width WY2 may be closer to the lip 100L (see FIG. 1) than the portion of the trench base 133B having the first width WY1. The portion of the trench base 133B having the second width WY2 may be closer to the lip 100L (see FIG. 1) than the portion of the trench base 133B having the first width WY1. The portion of the trench base 133B having the third width WY3 may be closer to the lip 100L (see FIG. 1) than the portion of the trench base 133B having the second width WY2.

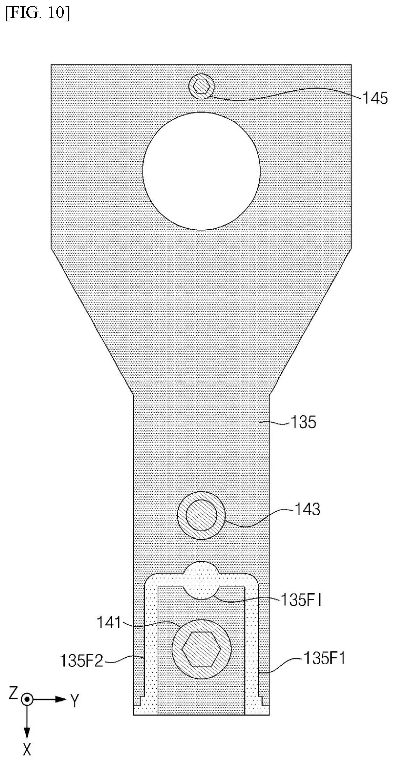

FIG. 10 illustrates a spacer shim 135 according to aspects.

Referring to FIG. 10, the spacer shim 135 may include an inlet 135FI and first and second insulating flow paths 135F1 and 135F2. The inlet 135FI is substantially the same as the inlet 133FI described above with reference to FIGS. 5 to 9. The first insulating flow path 135F1 is substantially the same as the insulating flow path 133F described above with reference to FIGS. 5 to 9. The second insulating flow path 135F2 may have a symmetrical shape with respect to the first insulating flow path 135F1.

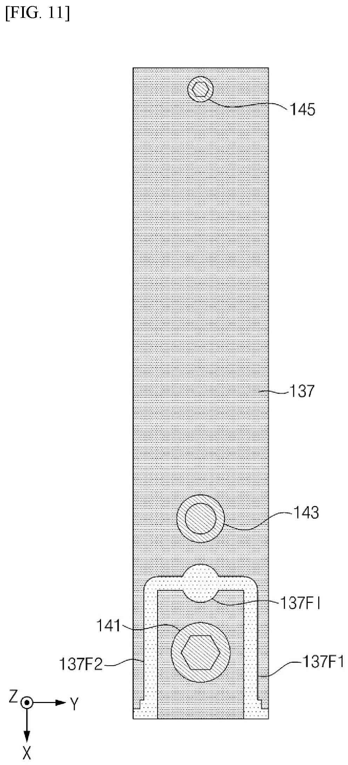

FIG. 11 illustrates a spacer shim 137 according to aspects.

Referring to FIG. 11, the spacer shim 137 may include an inlet 137FI and first and second insulating flow paths 137F1 and 137F2. The inlet 137FI is substantially the same as the inlet 133FI described above with reference to FIGS. 5 to 9. The first insulating flow path 137F1 is substantially the same as the insulating flow path 133F described above with reference to FIGS. 5 to 9. The second insulating flow path 137F2 may have a symmetrical shape with respect to the first insulating flow path 137F1.

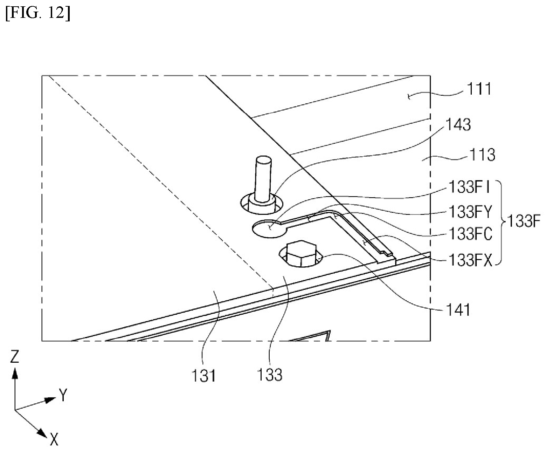

FIG. 12 is a perspective view of a part of a die coater according to aspects.

Referring to FIGS. 3 and 12, in the shim 130, at least one of the spacer shims 133, 135, and 137 may be integrally formed with the body shim 131. The integral forming of at least one of the spacer shims 133, 135, and 137 with the body shim 131 may be understood that the body shim 131 and at least one of the spacer shims 133, 135 and 137 form a single piece or a single integrated structure together. The body shim 131 and at least one of the spacer shims 133, 135, and 137 may be manufactured together by the same process such that at least one of the spacer shims 133, 135, and 137 are integrated with the body shim 131. When at least one of the spacer shims 133, 135, and 137 is integrated with the body shim 131, a position of at least one of the spacer shims 133, 135, and 137 may be determined by the assembling of the body shim 131 with the first die 110. FIG. 12 illustrates that the body shim 131 is integrated with the spacer shim 133 but the other spacer shim 135 and 137 may also be integrated with the body shim 131.

According to aspects, the spacer shims 133, 135, and 137 may all be integrally formed with the body shim 131.

According to aspects, the spacer shims 133 may be integrated with the body shim 131, and the spacer shims 135 and 137 may be separated from the body shim 131.

According to aspects, the spacer shims 137 may be integrated with the body shim 131, and the spacer shims 133 and 135 may be separated from the body shim 131.

According to aspects, the spacer shim 135 may be integrated with the body shim 131, and the spacer shims 133 and 137 may be separated from the body shim 131.

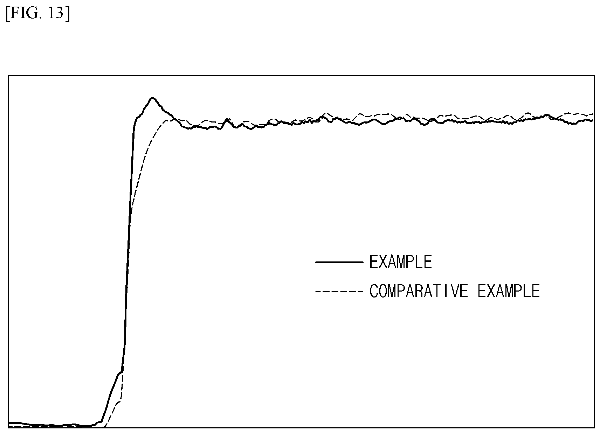

FIG. 13 is a graph showing an effect of the die coater 100 (see FIG. 1) according to aspects.

More specifically, FIG. 13 illustrates a loading amount profile of an electrode slurry applied to the current collector SB (see FIG. 1) by the die coater 100 (see FIG. 1) in a transverse direction, and a loading amount profile of an electrode slurry applied to a current collector by a die coater according to a comparative example of the related art in the transverse direction. In FIG. 13, the horizontal axis represents positions in the transverse direction, which are expressed in arbitrary units. In FIG. 13, the vertical axis represents loading amounts expressed in arbitrary units.

FIGS. 1 and 13 show that the perpendicularity of the loading amount profile of the electrode slurry applied to the current collector SB by the die coater 100 in the transverse direction increases greatly, compared to the related art.

The present disclosure has been described above in more detail with reference to the drawings, the aspects, etc. However, the configurations illustrated in the drawings or aspects described in the present specification are only examples of the present disclosure and do not reflect all the technical ideas of the present disclosure and thus it should be understood that various equivalents and modifications that replace the configurations would have been made at the filing date of the present application.

## Claims

1. A die coater, comprising:
a first die including a land part and a manifold, the manifold having a predetermined depth from the land part and configured to accommodate an electrode slurry;
a body shim coupled to the first die, the body shim including wings and a body interposed between and connected to the wings, wherein the wings protrude from the body in a first direction and the body extends in a second direction perpendicular to the first direction; and
a first spacer shim coupled to the first die, the first spacer shim overlapping the manifold,
wherein the first spacer shim includes first and second side walls that define an insulating flow path extending in the first direction, and
a width of the insulating flow path in the second direction is variable.

2. The die coater of claim 1, wherein the first and second side walls face each other, the first side wall extends in the first direction, and the second side wall includes a step structure.

3. The die coater of claim 2, wherein the second side wall includes a first portion extending in the first direction, a second portion connected to the first portion and extending in the second direction, a third portion connected to the second portion and extending in the first direction, and a fourth portion connected to the third portion and extending in the second direction.

4. The die coater of claim 3, wherein a length of the second portion of the second side wall in the second direction is different from a length of the fourth portion of the second side wall in the second direction.

5. The die coater of claim 3, wherein a length of the second portion of the second side wall in the second direction is less than a length of the fourth portion of the second side wall in the second direction.

6. The die coater of claim 3, wherein a length of the second portion of the second side wall in the second direction ranges from 0.25 to 0.75 times a length of the fourth portion of the second side wall in the second direction.

7. The die coater of claim 3, wherein a length of the first side wall in the first direction is greater than a sum of a length of the first portion of the second side wall in the first direction and a length of the third portion of the second side wall in the first direction.

8. The die coater of claim 3, wherein the fourth portion of the second side wall extends parallel to the first direction to an edge of the first spacer shim.

9. The die coater of claim 3, wherein a distance between the first side wall and the first portion of the second side wall in the second direction is less than a distance between the first side wall and the third portion of the second side wall in the second direction.

10. The die coater of claim 3, wherein a distance between the first side wall and the first portion of the second side wall in the second direction is the same as a length of the fourth portion of the second side wall in the second direction.

11. The die coater of claim 3, further comprising a second spacer shim coupled to the first die, the second spacer shim overlapping the manifold and spaced apart from the first spacer shim in the second direction,
wherein the second spacer shim includes first and second insulating flow paths,
the first insulating flow path is the same as the insulating flow path, and
the second insulating flow path is symmetrical to the first insulating flow path.

12. The die coater of claim 11, further comprising a third spacer shim coupled to the first die, the third spacer shim overlapping the manifold and interposed between the first and second spacer shims,
wherein the third spacer shim includes third and fourth insulating flow paths,
the third insulating flow path is the same as the insulating flow path, and
the fourth insulating flow path is symmetrical to the third insulating flow path.

13. The die coater of claim 12, wherein the first spacer shim, the second spacer shim, and the third spacer shim are integrated with the body shim.
